# FASCICULE DE BREVET EUROPEEN

(11) **EP 3 411 255 B1**
(45) Date de publication et mention de la délivrance du brevet: **04.11.2020**
(21) Numéro de dépôt: 17707610.6
(22) Date de dépôt: 01.02.2017
(51) Int. Cl.: B60K 11/08

(54) **SYSTEME DE GESTION D'ENTREE D'AIR POUR FACE AVANT DE VEHICULE AUTOMOBILE**
LUFTEINLASSVERWALTUNGSSYSTEM FÜR DIE FRONTPLATTE EINES KRAFTFAHRZEUGS
AIR INLET MANAGEMENT SYSTEM FOR THE FRONT PANEL OF A MOTOR VEHICLE

(30) Priorité: 03.02.2016 FR 1650848
(43) Date de publication de la demande: 12.12.2018
(73) Titulaire: Valeo Systemes Thermiques-THS, 78322 Le Mesnil Saint Denis Cedex (FR)
(72) Inventeur: GERBER, Sylvain, 91320 Wissous (FR)
(74) Mandataire: Tran, Chi-Hai
(86) Numéro de dépôt international: PCT/FR2017/050219
(87) Numéro de publication internationale: WO 2017/134382

(56) Documents cités:
- WO-A2-2012/158512
- US-A1- 2013 284 401
- US-A1- 2014 170 960

## Description

L'invention a pour objet un système de gestion d'air d'une entrée d'air pour face avant de véhicule automobile.

Un tel système comprend généralement au moins un volet et un dispositif de commande de déplacement dudit au moins un volet entre une position d'obturation de l'entrée d'air et au moins une position d'ouverture de l'entrée d'air., voir par exemple le document US 2013/284401.

Un tel système est le plus souvent désigné par l'acronyme AGS, provenant de l'expression de langue anglaise "Active Grille Shutter".

Le système de gestion d'entrée d'air est de préférence installé au niveau d'une calandre du véhicule automobile.

En position d'ouverture de l'entrée d'air, l'air peut circuler à travers la calandre et participer notamment au refroidissement du moteur du véhicule automobile.

En position d'obturation de l'entrée d'air, l'air ne pénètre pas via la calandre ce qui réduit la traînée et permet ainsi de réduire la consommation de carburant et l'émission de dioxyde de carbone.

Le système de gestion d'entrée d'air permet donc de réduire la consommation d'énergie et la pollution lorsque le moteur n'a pas besoin d'être refroidi par l'air extérieur.

Généralement, chaque volet est muni d'un pion de pivotement dudit au moins un volet, le système comportant un support pourvu d'au moins un palier configuré pour recevoir le pion de pivotement ainsi qu'un élément de fermeture du palier.

Le pivotement du pion dans le palier permet le passage de la position d'ouverture à la position d'obturation, et inversement de la position d'obturation à la position d'ouverture.

D'autre part, chaque volet est généralement équipé d'un doigt d'actionnement solidaire en mouvement d'une bielle contrôlée par le dispositif de commande.

Ainsi, un déplacement de la bielle entraîne un pivotement du doigt d'actionnement, ce qui conduit au pivotement de chaque volet.

Toutefois, alors que le déplacement de la bielle doit se faire selon une direction privilégiée, par exemple perpendiculaire à l'axe de pivotement des volets, il n'est pas rare que la bielle subisse des mouvements de côté, ou louvoiements, ce qui perturbe l'ouverture et la fermeture du système.

Le but de l'invention est de remédier à cet inconvénient.

A cet effet, l'invention a pour objet un système de gestion d'air d'une entrée d'air pour face avant de véhicule automobile, comprenant au moins un volet et un cadre de maintien dudit au moins un volet, ledit au moins un volet étant muni d'un pion de pivotement dudit au moins un volet, le système comportant un support pourvu d'au moins un palier configuré pour recevoir ledit pion de pivotement dudit au moins un volet et un élément de fermeture dudit au moins un palier, le système comprenant un dispositif de commande de déplacement dudit au moins un volet entre une position d'obturation de l'entrée d'air et au moins une position d'ouverture de l'entrée d'air par pivotement du pion de pivotement au niveau du palier, ledit au moins un volet comprenant un doigt d'actionnement dudit au moins un volet, solidaire en mouvement d'une bielle contrôlée par le dispositif de commande, le système de gestion étant caractérisé en ce que l'élément de fermeture forme guidage de la bielle.

Ainsi, grâce au système selon la présente invention, la bielle n'est pas libre en mouvement mais au contraire guidée, ce qui évite toute déviation de trajectoire, et, en particulier, tout mouvement parasite de louvoiement.

Selon une autre caractéristique de l'invention, l'élément de fermeture comprend une glissière pour guider la bielle.

Selon une autre caractéristique de l'invention, la glissière comprend deux rails, chacun des rails présentant une forme générale complémentaire d'un mouvement de la bielle.

Selon une autre caractéristique de l'invention, chaque rail présente une forme générale ondulée.

Selon une autre caractéristique de l'invention, l'élément de fermeture comprend une paroi de fermeture dudit au moins un palier.

Selon une autre caractéristique de l'invention, l'élément de fermeture comprend une paroi d'appui sur le cadre.

Selon une autre caractéristique de l'invention, le système comprend un moyen de retenue de l'élément de fermeture au cadre de maintien.

Selon une autre caractéristique de l'invention, une extrémité de l'élément de fermeture est conformée pour constituer le moyen de retenue.

Selon une autre caractéristique de l'invention, l'extrémité de l'élément de fermeture comprend une patte configurée pour coopérer avec une extrémité de la glissière de sorte à enserrer une partie du cadre et/ou une partie du support dudit au moins un palier et/ou un ergot de maintien de la patte contre le cadre.

Selon une autre caractéristique de l'invention, le système comprend une pluralité de volets.

Selon une autre caractéristique de l'invention, le système est dépourvu de vis entre l'élément de fermeture et le cadre.

D'autres caractéristiques et avantages de l'invention apparaîtront à la lecture de la description qui va suivre. Celle-ci est purement illustrative et doit être lue en regard des dessins annexés sur lesquels :
- la figure 1 illustre une vue en perspective d'un système de gestion d'entrée d'air selon la présente invention dans une première position ;
- la figure 2 illustre une vue en perspective d'un système de gestion d'entrée d'air selon la présente invention dans une deuxième position ;
- la figure 3 illustre une vue en coupe transversale du système de la figure 1 ;
- la figure 4 illustre une vue en perspective de détail du système de la figure 1 ; et
- la figure 5 illustre une vue en perspective du système de la figure 1 en cours de montage.

### Système de gestion d'air d'une entrée d'air

L'invention a pour objet un système de gestion d'air d'une entrée d'air pour face avant de véhicule automobile.

Le système est le plus souvent désigné par l'acronyme AGS, provenant de l'expression de langue anglaise "Active Grille Shutter".

Le système de gestion d'entrée d'air est de préférence installé au niveau d'une calandre du véhicule automobile, et permet un contrôle de flux d'air traversant la face avant du véhicule, y compris un compartiment moteur du véhicule.

Sur les figures, le système de gestion est référencé 1, tandis que l'entrée d'air gérée par le système de gestion 1 est référencée 2.

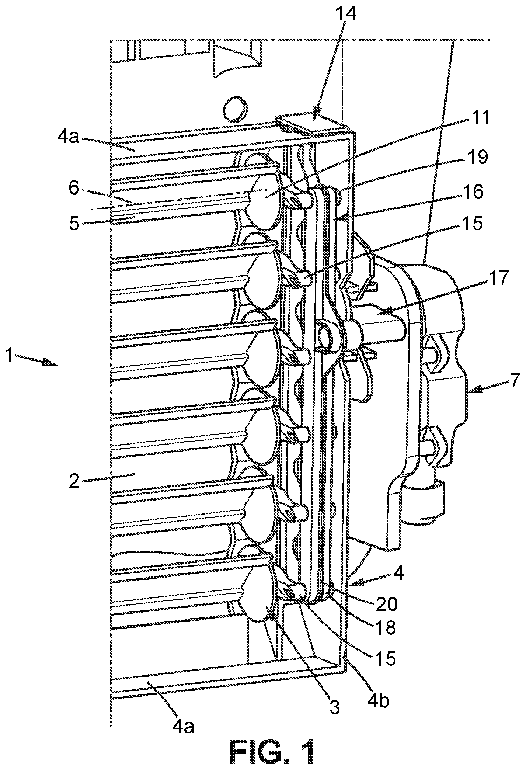

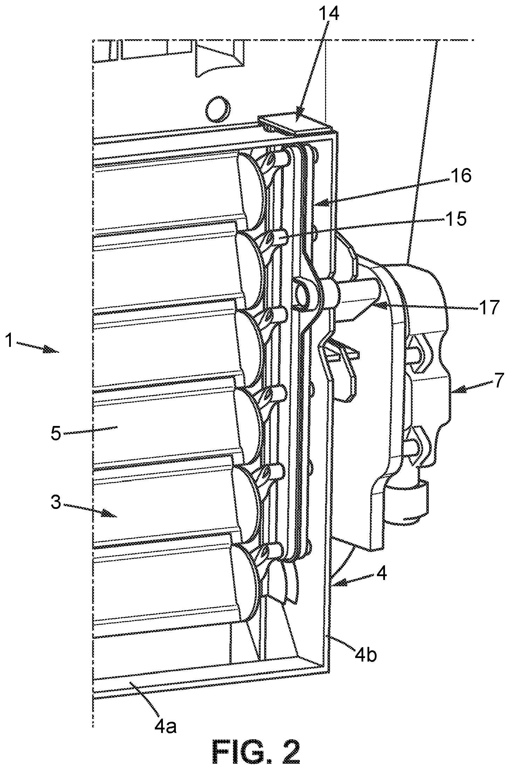

Comme visible sur les figures 1 et 2, le système de gestion 1 d'une entrée d'air 2 comprend au moins un volet 3.

Sur le mode de réalisation illustré, le système de gestion 1 comprend une pluralité de volets 3.

Comme visible sur les figures 1 et 2, le système de gestion 1 comprend également un cadre 4 de maintien, de préférence rigide, de la pluralité de volets 3.

Le cadre 4 présente une forme générale rectangulaire.

Le cadre 4 délimite l'entrée d'air 2 que les volets 3 ouvrent et ferment, comme il va être détaillé ultérieurement.

Le cadre 4 comprend deux traverses supérieure et inférieure, opposées, 4a, et deux montants opposés 4b.

Dans la position d'installation dans le véhicule automobile, le cadre 4 est configuré de sorte que les traverses 4a s'étendent sensiblement horizontalement, tandis que les montants 4b s'étendent sensiblement verticalement.

Sur les figures 1 et 2, les volets 3 sont disposés parallèlement les uns au-dessous des autres.

Bien entendu, l'invention ne se limite pas au mode de réalisation illustré, et, en particulier, le nombre de volets et la position des volets les uns relativement aux autres peut varier.

Chaque volet 3 comprend une surface de travail 5.

Par exemple, la surface de travail 5 est un panneau de forme générale rectangulaire plane.

Bien entendu, l'invention ne se limite pas aux volets rectangulaires plans, et d'autres configurations sont tout à fait envisageables.

Chaque volet 3 comprend un axe 6 solidaire de la surface de travail 5.

Sur les figures 1 et 2, les axes 6 s'étendent sensiblement horizontalement.

Chaque volet 3 est monté pivotant entre une position d'obturation de l'entrée d'air 2 et au moins une position d'ouverture de l'entrée d'air 2.

Dans la position d'obturation de l'un des volets 3, encore appelée position de fermeture, la surface de travail 5 couvre une partie de l'entrée d'air 2.

Dans chaque position d'ouverture, la surface de travail 5 forme un angle non nul avec une surface virtuelle plane de l'entrée d'air 2, ce qui permet qu'un flux d'air traverse l'entrée d'air 2.

Comme visible sur les figures 1 et 2, le système de gestion 1 comprend également un dispositif de commande 7 de déplacement du ou des volets 3.

Le dispositif de commande 7 est avantageusement un actionneur.

Selon la variante de réalisation illustrée, un unique actionneur 7 commande tous les volets 3.

Avantageusement, le système de gestion comprend une cinématique telle que tous les volets 3 du système de gestion 1 ont un déplacement identique, comme il va être détaillé ultérieurement.

Toutefois, l'invention ne se limite pas à ce cas et il est envisageable de prévoir des volets dont les déplacements ne sont pas identiques.

Comme visible sur la figure 1, dans la position d'ouverture des volets 3, l'entrée d'air 2 est traversée par un flux d'air.

Cette position est particulièrement avantageuse quand le moteur du véhicule nécessite un refroidissement important.

Sur la figure 2, l'entrée d'air 2 est complètement fermée par les surfaces de travail 5.

Cette position est particulièrement avantageuse quand le véhicule roule à vitesse élevée puisque l'obturation de l'entrée d'air 2 améliore l'aérodynamisme du véhicule automobile et de ce fait permet une réduction de la consommation d'essence.

En cela, les volets 3 peuvent être qualifiés de volets de réduction de coefficient de traînée du véhicule automobile.

Comme visible sur les figures 1 et 2, chaque volet 3 comprend un pion de pivotement 10 s'étendant de préférence depuis un disque 11 solidaire d'une extrémité de la surface de travail 5, dans le prolongement de l'axe 6.

Comme également visible sur les figures, le système 1 comprend un support 12 pourvu de découpes formant paliers 13, chaque palier 13 étant configuré pour recevoir un pion de pivotement 10 de l'un des volets 3.

Le pivotement de chaque pion 10 dans le palier associé 13 permet le pivotement de la surface de travail 5 entre la position d'obturation et la ou les positions d'ouvertures.

Le système 1 comprend un élément de fermeture 14 des paliers 11.

Comme particulièrement visible sur les figures 1 à 3, chaque volet 3 comprend un doigt d'actionnement 15.

Le doigt 15 s'étend parallèlement au pion 10 et en regard du pion 10 depuis le disque 11.

Le système 1 comprend également une bielle 16 contrôlée par l'actionneur 7 via un levier 17.

La bielle 16 est de préférence en élastomère.

La bielle 16 s'étend selon une direction longitudinale parallèle aux montants 4b.

La bielle 16 comprend un corps principal 18 muni de trous 19 de passage de chaque doigt 15.

La bielle 16 comprend avantageusement une portion de glissement 20 conformée pour coopérer avec l'élément de fermeture 14, comme il va être détaillé ultérieurement.

La portion de glissement 20 s'étend avantageusement tout le long de la périphérie du corps principal 18.

### Elément de fermeture

L'élément de fermeture 14 va maintenant être décrit plus en détail.

Selon l'invention, l'élément de fermeture 14 forme guidage de la bielle 16.

Comme particulièrement visible sur les figures 1 à 5, l'élément de fermeture 14 comprend une glissière 30.

La glissière 30 comprend deux rails 31, de préférence identiques et parallèles l'un à l'autre.

Les rails 31 s'étendent selon une direction longitudinale parallèle aux montants 4b du cadre 4.

Avantageusement, chacun des rails présente une forme générale complémentaire d'un mouvement de la bielle 16, comme il va être expliqué ultérieurement.

Sur le mode de réalisation illustré, chaque rail 31 présente une forme générale ondulée, c'est-à-dire que chaque rail présente une succession de vagues et de creux.

Chaque rail 31 est délimité par deux bords 32, 33.

Le bord 32 est rectiligne tandis que le bord 33 décrit les ondulations du rail 31.

Les deux rails 31 sont reliés l'un à l'autre par une base 34 disposée sensiblement orthogonalement aux rails 31.

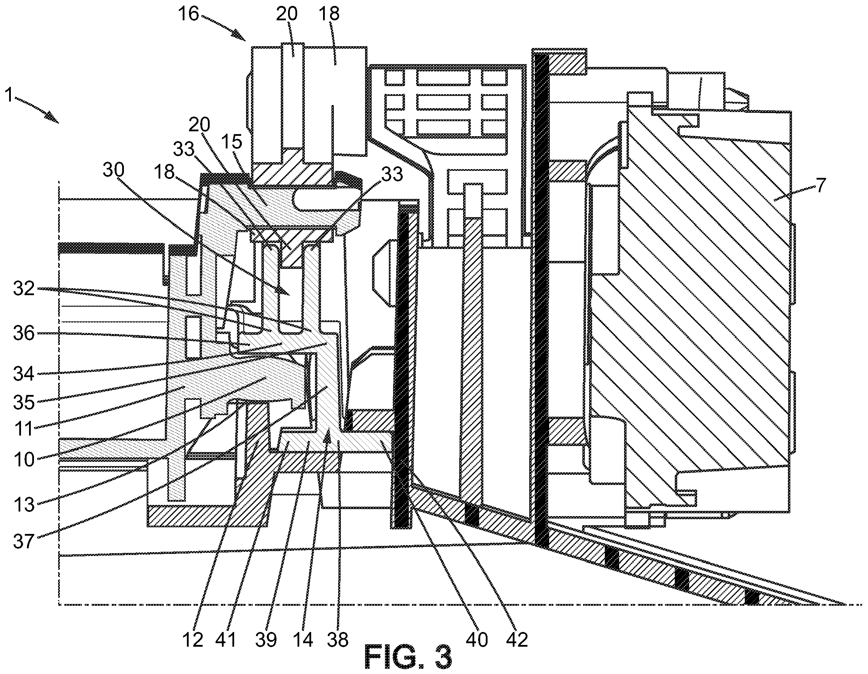

Comme visible sur la figure 3, la base 34 fait saillie de part et d'autre des rails 31 de sorte qu'une section de la glissière 30 présente une forme générale de π inversé, ou en d'autres termes, formant ainsi une rainure.

La base 34 présente une forme rectangulaire délimitée par deux bords 35 et 36 s'étendant parallèlement aux bords 32, 33 des rails 31.

L'élément de fermeture 14 comprend également une paroi 37 de fermeture des paliers 13.

La paroi 37 présente une forme générale rectangulaire délimitée par le bord 35 de la base 34 et un second bord 38, opposé au bord 35.

Comme visible sur la figure 3, une section de la paroi 37 s'étend orthogonalement à la base 34 dans un sens d'éloignement des rails 31.

Comme il ressort également de la figure 3, le pion 10 est encadré par la base 34 et la paroi de fermeture 37.

L'élément de fermeture 14 comprend également une paroi 39 d'appui sur le cadre 4.

Comme il ressort clairement de la figure 3, vu en section, la paroi d'appui 39 et la paroi de fermeture 37 forment un T inversé.

La paroi 39 est délimité par deux bords longitudinaux 40, 41.

Le T inversé est jointif du π inversé par le bord 35 de la base 34.

La paroi d'appui 39 est posée contre une partie de bâti 42 du cadre 4.

De préférence, le bord 40 est maintenu contre une autre partie de bâti 43 du cadre 4.

La paroi 39 permet de maintenir l'élément de fermeture 14 en position dans le cadre 4.

### Guidage de la bielle par l'élément de fermeture

Le déplacement de la bielle 16 est contrôlé par l'actionneur 7 via le levier 17.

Dans le mode de réalisation illustré, la bielle 16 décrit une trajectoire partiellement circulaire.

C'est pour cela que les bords 33 des rails 31 sont ondulés, de façon à épouser les mouvements de la bielle 16.

Comme il ressort des figures, la bielle 16 se déplace le long des ondulations des rails 31, la portion 20 étant positionnée entre les deux bords ondulés 33.

Avantageusement, la périphérie du corps principal 18 de la bielle 16 prend appui sur les bords ondulés 33.

Ainsi, la glissière 30 permet de guider la bielle 16, ce qui évite toute déviation de trajectoire.

La glissière 30 forme une rainure, tandis que les deux rails 31 forment chacun une nervure sur laquelle la bielle 16 se déplace, de sorte à faire pivoter les volets 3 de la position de fermeture à une position d'ouverture. Nous pouvons également dire que la portion de glissement 20 correspond à une nervure glissant dans la rainure formée par la glissière 30.

### Solidarisation de l'élément de retenue au cadre

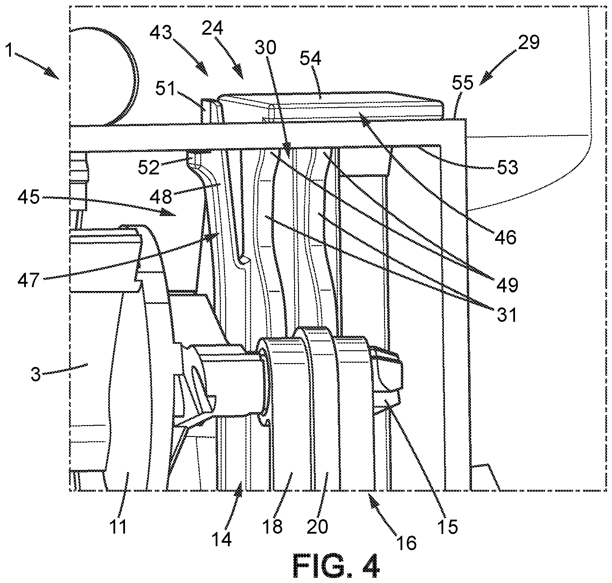

Comme particulièrement visible à la figure 4, le système 1 comprend un moyen de retenue 45 de l'élément de fermeture 14 au cadre 4.

Sur le mode de réalisation illustré, une extrémité 46 de l'élément de fermeture 14 est conformée pour constituer le moyen de retenue 45.

Une extrémité 47 du bord 36 de la base 34 forme une patte 48.

La patte 48 est disposée espacée et en regard d'une extrémité 49 des rails 31.

Le support 12 des paliers 13 est enserré entre la patte 48 et l'extrémité 49.

En variante, une partie 50 de bâti du cadre 4 est enserrée entre la patte 48 et l'extrémité 49.

Comme visible à la figure 4, une extrémité libre 51 de la patte 48 comprend un ergot 52 de maintien de la patte 48 contre le cadre 4.

L'ergot de maintien 52 est posé contre une face intérieure 53 de la traverse supérieure 4a.

Avantageusement, l'extrémité 49 se replie en une paroi d'appui 54 contre une face extérieure 55 de la traverse supérieure 4a.

On note que le système 1 est avantageusement dépourvu de vis pour solidariser l'élément de fermeture 14 et le cadre 4.

La solidarisation de l'élément de fermeture 14 et du cadre 4 est réalisée par la paroi d'appui 39 de l'élément de fermeture 14 contre le bâti du cadre 4 et/ou par le moyen de retenue 45.

### Procédé de fabrication

L'invention a également pour objet un procédé de fabrication du système de gestion 1.

Ce procédé comprend de préférence une étape d'insertion de l'élément de fermeture 14 dans le cadre 4.

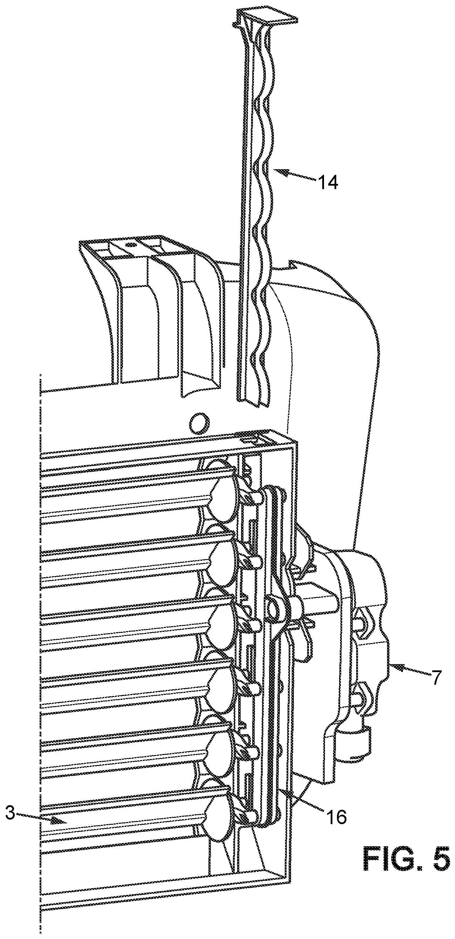

Cette étape d'insertion, illustrée à la figure 5, est réalisée en faisant translater l'élément de fermeture 14 entre la bielle 16 et le cadre 4, dans une direction parallèle aux montants 4b.

On constate ainsi que le procédé de montage du système 1 est particulièrement simple.

On note également qu'une fois l'élément de fermeture en place, il est maintenu en position par la paroi d'appui 39 et son extrémité 46 formant moyen de retenue 45.

Ainsi, il n'est pas nécessaire de prévoir de moyens de fixation supplémentaires, tels que des vis.

### Avantages

Le système de gestion selon la présente invention présente de nombreux avantages, et en particulier le guidage de la bielle permettant d'éviter tout écart de trajectoire malencontreux et assurant de ce fait un fonctionnement optimisé des volets.

De plus, le système selon la présente invention est avantageusement sans vis, ce qui simplifie nettement son procédé de fabrication et en réduit les coûts.

On ajoute qu'une même pièce intègre de préférence trois fonctions : l'élément de fermeture permet en effet de fermer les paliers, de guider la bielle et de se fixer lui-même au cadre.

## Revendications

1. Système de gestion d'air d'une entrée d'air (2) pour face avant de véhicule automobile, comprenant au moins un volet (3) et un cadre de maintien dudit au moins un volet (3), ledit au moins un volet étant muni d'un pion de pivotement (10) dudit au moins un volet (3), le système (1) comportant un support (12) pourvu d'au moins un palier (13) configuré pour recevoir ledit pion de pivotement (10) dudit au moins un volet (3) et un élément de fermeture (14) dudit au moins un palier, le système comprenant un dispositif de commande (7) de déplacement dudit au moins un volet (3) entre une position d'obturation de l'entrée d'air (2) et au moins une position d'ouverture de l'entrée d'air (2) par pivotement du pion de pivotement (10) au niveau du palier (13), ledit au moins un volet (3) comprenant un doigt d'actionnement (15) dudit au moins un volet (3), solidaire en mouvement d'une bielle (16) contrôlée par le dispositif de commande (7), le système de gestion (1) étant **caractérisé en ce que** l'élément de fermeture (14) forme guidage de la bielle (16).

2. Système de gestion d'une entrée d'air selon la revendication 1, dans lequel l'élément de fermeture (14) comprend une glissière (30) pour guider la bielle (16).

3. Système de gestion d'une entrée d'air selon la revendication précédente, dans lequel la glissière (30) comprend deux rails (31), chacun des rails (31) présentant une forme générale complémentaire d'un mouvement de la bielle (16).

4. Système de gestion d'une entrée d'air selon la revendication précédente, dans lequel chaque rail (31) présente une forme générale ondulée.

5. Système de gestion d'une entrée d'air selon l'une des revendications précédentes, dans lequel l'élément de fermeture (14) comprend une paroi de fermeture (37) dudit au moins un palier (13).

6. Système de gestion d'une entrée d'air selon la revendication précédente, dans lequel l'élément de fermeture (14) comprend une paroi d'appui (39) sur le cadre (4).

7. Système de gestion d'une entrée d'air selon l'une quelconque des revendications précédentes, comprenant un moyen de retenue (45) de l'élément de fermeture (14) au cadre de maintien (4).

8. Système de gestion d'une entrée d'air selon la revendication précédente, dans lequel une extrémité (46) de l'élément de fermeture est conformée pour constituer le moyen de retenue (45).

9. Système de gestion d'une entrée d'air selon la revendication précédente, dans lequel l'extrémité (46) de l'élément de fermeture (14) comprend une patte (48) configurée pour coopérer avec une extrémité (49) de la glissière (30) de sorte à enserrer une partie du cadre et/ou une partie du support (12) dudit au moins un palier (13) et/ou un ergot (52) de maintien de la patte (48) contre le cadre (4).

10. Système de gestion d'une entrée d'air selon l'une quelconque des revendications précédentes, comprenant une pluralité de volets (3).

## Patentansprüche

1. Lufverwaltungssystem eines Lufteinlasses (2) für die Frontseite eines Kraftfahrzeugs, aufweisend mindestens eine Klappe (3) und einen Rahmen zum Halten der mindestens einen Klappe (3), wobei die mindestens eine Klappe mit einem Zapfen zum Drehen (10) der mindestens einen Klappe (3) versehen ist, wobei das System (1) einen Träger (12), welcher mit mindestens einem Lager (13) vorgesehen ist, welches dafür ausgelegt ist, um den Zapfen zum Drehen (10) der mindestens einen Klappe (3) aufzunehmen, und ein Element zum Schließen (14) des mindestens einen Lagers umfasst, wobei das System eine Vorrichtung zum Steuern (7) der Bewegung der mindestens einen Klappe (3) zwischen einer Stellung zum Verschluss des Lufteinlasses (2) und mindestens einer Stellung zur Öffnung des Lufteinlasses (2) durch Drehen des Drehzapfens (10) auf Höhe des Lagers (13) aufweist, wobei die mindestens eine Klappe (3) einen Finger zur Betätigung (15) der mindestens einen Klappe (3) aufweist, welcher bewegungsfest mit einer Koppelstange (16) verbunden ist, welche durch die Steuervorrichtung (7) gesteuert wird, wobei das Verwaltungssystem (1) **dadurch gekennzeichnet ist, dass** das Verschlusselement (14) eine Führung der Koppelstange (16) bildet.

2. Verwaltungssystem eines Lufteinlasses nach Anspruch 1, bei welchem das Verschlusselement (14) eine Gleitschiene (30) aufweist, um die Koppelstange (16) zu führen.

3. Verwaltungssystem eines Lufteinlasses nach dem vorhergehenden Anspruch, bei welchem die Gleitschiene (30) zwei Schienen (31) aufweist, wobei jede der Schienen (31) eine zu einer Bewegung der Koppelstange (16) im Allgemeinen komplementäre Form aufweist.

4. Verwaltungssystem eines Lufteinlasses nach dem vorhergehenden Anspruch, bei welchem jede Schiene (31) eine im Allgemeinen gewellte Form aufweist.

5. Verwaltungssystem eines Lufteinlasses nach einem der vorhergehenden Ansprüche, bei welchem das Verschlusselement (14) eine Wand zum Verschluss (37) des mindestens einen Lagers (13) aufweist.

6. Verwaltungssystem eines Lufteinlasses nach einem der vorhergehenden Ansprüche, bei welchem das Verschlusselement (14) eine Wand zur Stütze (39) an dem Rahmen (4) aufweist.

7. Verwaltungssystem eines Lufteinlasses nach einem der vorhergehenden Ansprüche, aufweisend ein Mittel zum Festhalten (45) des Verschlusselements (14) an dem Halterahmen (4).

8. Verwaltungssystem eines Lufteinlasses nach dem vorherigen Anspruch, bei welchem ein Ende (46) des Verschlusselements ausgebildet ist, um das Festhaltemittel (45) zu bilden.

9. Verwaltungssystem eines Lufteinlasses nach dem vorherigen Anspruch, bei welchem das Ende (46) des Verschlusselements (14) eine Klaue (48) aufweist, welche dafür ausgelegt ist, um mit einem Ende (49) der Gleitschiene (30) derartig zusammenzuwirken, dass ein Teil des Rahmens und/oder ein Teil des Trägers (12) des mindestens einen Lagers (13) und/oder eine Nase (52) zum Halten der Klaue (48) gegen den Rahmen (4) gespannt wird.

10. Verwaltungssystem eines Lufteinlasses nach einem der vorhergehenden Ansprüche, aufweisend eine Vielzahl von Klappen (3).

## Claims

1. Air management system of an air inlet (2) for a front panel of a motor vehicle, comprising at least one flap (3) and a frame for holding the said at least one flap (3), the said at least one flap being provided with a pivot pin (10) for the pivoting of the said at least one flap (3), the system (1) comprising a support (12) provided with at least one bearing (13) configured to receive the said pivot pin (10) of the said at least one flap (3) and a closure element (14) for closing the said at least one bearing, the system comprising a control device (7) for controlling the movement of the said at least one flap (3) between a position of blocking of the air inlet (2) and at least one position of opening of the air inlet (2) by the pivot pin (10) pivoting at the bearing (13), the said at least one flap (3) comprising an actuating lug (15) for actuating the said at least one flap (3), this being constrained to move with a connecting rod (16) that is controlled by the control device (7), the management system (1) being **characterized in that** the closure element (14) forms a guide for the connecting rod (16).

2. Air inlet management system according to Claim 1, in which the closure element (14) comprises a slide (30) for guiding the connecting rod (16).

3. Air inlet management system according to the preceding claim, in which the slide (30) comprises two rails (31), each one of the rails (31) having a general shape that matches a movement of the connecting rod (16).

4. Air inlet management system according to the preceding claim, in which each rail (31) has a general undulating shape.

5. Air inlet management system according to one of the preceding claims, in which the closure element (14) comprises a closure wall (37) for closing the said at least one bearing (13).

6. Air inlet management system according to the preceding claim, in which the closure element (14) comprises a bearing wall (39) for bearing against the frame (4).

7. Air inlet management system according to any one of the preceding claims, comprising a retaining means (45) for retaining the closure element (14) on the holding frame (4).

8. Air inlet management system according to the preceding claim, in which one end (46) of the closure element is shaped so as to constitute the retaining means (45) .

9. Air inlet management system according to the preceding claim, in which the end (46) of the closure element (14) comprises a tab (48) that is configured to cooperate with an end (49) of the slide (30) so as to trap a part of the frame and/or a part of the support (12) of the said at least one bearing (13) and/or a spur (52) for holding the tab (48) against the frame (4).

10. Air inlet management system according to any one of the preceding claims, comprising a plurality of flaps (3) .
